# EUROPEAN PATENT APPLICATION

(11) **EP 4 660 139 A1**
(43) Date of publication of application: **10.12.2025**
(21) Application number: 24180533.2
(22) Date of filing: 06.06.2024
(51) Int. Cl.: C01D 7/00, C01D 3/04, C01D 3/08, C01D 7/18, C01F 11/46

(54) **RECYCLING EFFLUENTS FROM SODIUM CARBONATE AND CALCIUM SULFATE PRODUCTION**

(71) Applicant: Solvay SA, 1120 Brussels (BE)
(72) Inventor: LEVEQUE, Emmanuel, 54110 Dombasle-Sur-Meurthe (FR); NETO, Jérémy, 54110 Dombasle-Sur-Meurthe (FR); HORBEZ, Dominique, 93308 Aubervilliers (FR); CAMUS, Lydie, 93308 Aubervilliers (FR)
(74) Representative: Kraus & Lederer PartGmbB

(57) **Abstract**

The present invention relates to a process to manufacture sodium carbonate and calcium sulfate, wherein effluents from these processes are recycled. Particularly, the present invention relates to a process, wherein a sodium chloride solution obtained during calcium sulfate production is used as extraction liquid for a salt cavity.

## Description

### TECHNICAL FIELD

The present invention relates to sustainable development in the field of sodium carbonate production and calcium sulfate production, wherein effluents from these processes are recycled. In particular, it relates to the use of a sodium chloride solution obtained during calcium sulfate production as extraction liquid for salt cavities.

### TECHNICAL BACKGROUND

Sodium carbonate (soda ash) is the neutral sodium salt of carbonic acid. It is one of the most important raw materials used in the chemical industry. Its sodium content results in fluxing properties that make it important in the glass and silicate industries. In addition, it is used to neutralize inorganic and organic acids or acidic salts, and to maintain a constant pH in processes where acids are liberated. It is also utilized in the production of sodium salts (e.g., phosphates, nitrates, chromates, citrates, tartrates, salts of fatty acids), and can be used in aqueous solution to remove sulphur dioxide from process gas or off-gases. In addition to anhydrous sodium carbonate, Na₂CO₃, the following hydrates exist: sodium carbonate monohydrate, Na₂CO₃·H₂O; sodium carbonate heptahydrate, Na₂CO₃·7H₂O; and sodium carbonate decahydrate, Na₂CO₃·10H₂O.

Sodium carbonate is commonly prepared by the ammonia soda process, also called ammonia process or Solvay process. In this process, a residual liquor, called effluent herein, is obtained, which is an aqueous solution of calcium chloride and of sodium chloride, containing various substances in suspension (especially calcium sulfate, calcium carbonate, magnesium hydroxide, iron oxides and silica). Thus, calcium chloride and sodium chloride are obtained as by-products of the ammonia process. Usually, these by-products are disposed of from the production plant. The liquor is often clarified in large settling basins or ponds. However, mud with a high chloride content is produced, which may present disposal problems. Therefore, the end liquor is frequently diluted with used cooling water and discharged directly into the receiving water body, e.g. discharged into a river or to the sea.

Another method of producing sodium carbonate is an electrochemical process. Depending on the process conditions, also in this process, an effluent containing calcium chloride and sodium chloride is frequently obtained.

However, both from an ecological and economical point of view, it would be advantageous to use the by-products obtained during sodium carbonate production by the ammonia process or by an electrochemical process as starting materials for further processes instead of discharging them into a river. Removal of sodium chloride from the end liquor is carried out in only a few sodium carbonate plants. It can be used to produce calcium chloride.

Another important raw material is calcium sulfate, commonly known as gypsum (calcium sulfate dehydrate), which plays a pivotal role across various industries due to its versatile properties. Its significance stems from its widespread applications in construction, agriculture, food and beverage, pharmaceuticals, and environmental remediation. Nowadays, gypsum is only occasionally extracted from mines. Rather, gypsum is produced as a by-product in chemical industry. For instance, it can be produced by reacting sodium sulfate with calcium chloride.

Sodium sulfate is obtained for instance by reacting combustion gases containing sulphur oxide with sodium carbonate or sodium bicarbonate to remove sulphur dioxide from these gases. According to EP 0 005 301 A1, the gas to be purified is treated with sodium (bi)carbonate to form sodium sulphite and sodium sulfate, which is dissolved in water and the resulting aqueous solution is treated with calcium chloride to precipitate calcium sulfate dihydrate, which is recovered. The calcium sulfate dihydrate obtained in this way is used in the construction industry or discarded.

EP 0 366 182 B1 describes a process for removing an industrial residue containing sodium sulfate, according to which the sodium sulfate in the residue is treated with calcium chloride to precipitate calcium sulfate, the calcium sulfate is sent to a rock salt deposit, and an aqueous solution of sodium chloride is simultaneously withdrawn from the deposit. In an embodiment of this process, the calcium chloride originates from the calcium hydroxide treatment of the sodium bicarbonate mother liquor in the ammonia-soda process, and the treatment of sodium sulfate with calcium chloride may be carried out by mixing with sodium sulfate a residual liquor from a column for distilling the mother liquor from the manufacture of sodium bicarbonate by the ammonia process. The aqueous sodium chloride solution withdrawn from the deposit is sent back to the soda unit.

There remains a need for further improvements of reusing the by-products from sodium carbonate and/or sodium bicarbonate production and calcium sulfate production as starting materials for additional processes instead of discharging them.

### SUMMARY OF THE INVENTION

The present invention relates to a process to manufacture sodium carbonate and calcium sulfate from calcium carbonate, sodium chloride, and sodium sulfate, wherein effluents from sodium carbonate production and calcium sulfate production are recycled, particularly, wherein a sodium chloride solution obtained during calcium sulfate production is used as extraction liquid for a salt mine.

In particular, the present invention relates to a process to manufacture sodium carbonate and calcium sulfate from calcium carbonate, sodium chloride, and sodium sulfate, comprising the following steps:
(a) producing sodium carbonate by the ammonia process, or by an electrochemical process, from calcium carbonate and sodium chloride and generating an effluent containing calcium chloride and sodium chloride,
(b) reacting the effluent from step (a) with sodium sulfate to generate calcium sulfate and a liquid containing sodium chloride,
(c) feeding the liquid obtained in step (b) to a salt mine for extracting sodium chloride from the salt mine.

Preferred embodiments of the inventive process are described in the following description and in the dependent claims.

### DETAILED DESCRIPTION OF THE INVENTION

Before the process of the invention will be described in detail, it is to be understood that this invention is not limited to specific process conditions described herein, since such conditions may, of course, vary.

It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a compound" means one compound or more than one compound.

The terms "containing", "contains" and "contained of" as used herein are synonymous with "including", "includes" or " comprising", "comprises", and are inclusive or open-ended and do not exclude additional, non-recited members, elements or process steps. It will be appreciated that the terms "containing", "contains", "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt.-%", "weight percentage", or "percentage by weight" are used interchangeably. The same applies to the terms "% by volume", "vol.- %", "vol. percentage", or "percentage by volume", or "% by mol", "mol- %", "mol percentage", or "percentage by mol".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All indications of concentrations, typically given as g/L, refer to standard conditions.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and from different embodiments, as would be understood by those in the art.

Should the disclosure of any patents, patent applications, and publications which are incorporated herein by reference conflict with the description of the present application to the extent that it may render a term unclear, the present description shall take precedence.

### Definitions

### Ammonia process

The "ammonia process", also called "ammonia soda process" or "Solvay process" is the predominant process used for the production of sodium carbonate. It is described in detail in the literature, e.g. Ullmann's Encyclopedia of Industrial Chemistry, 2012, Wiley-VCH, Vol. 33, Sodium Carbonates, pages 299-317, and in its most common form includes the following steps:
1. Production of a saturated salt solution

   NaCl + H₂O
2. Burning of limestone or chalk (the CO₂ liberated is used in stage 4)

   CaCO₃ 4 CaO + CO₂
3. Saturation of the salt solution with ammonia

   NaCl + H₂O + NH₃
4. Precipitation of crude bicarbonate by the introduction of carbon dioxide (from stages 2 and 6)

   NaCl + H₂O + NH₃ + CO₂ 4 NH₄Cl + NaHCO₃
5. Filtering and washing of precipitated bicarbonate
6. Thermal decomposition of crude bicarbonate to sodium carbonate (the CO₂ evolved is recycled to stage 4)

   2 NaHCO₃ 4 Na₂CO₃+ H₂O + CO₂
7. Production of milk of lime

   CaO + H₂O 4 Ca(OH)₂
8. Recovery of ammonia by distillation of the mother liquor from stage 4 (bicarbonate precipitation) with milk of lime (the ammonia liberated is recycled to stage 3)

   2 NH₄Cl + Ca(OH)₂ 4 2 NH₃ + CaCl₂ + 2 H₂O
9. Optional production of refined sodium bicarbonate (sodium hydrogencarbonate). This is generally operated starting with an aqueous solution of sodium carbonate which is obtained either by dissolving sodium carbonate from step 6, or by decomposing crude bicarbonate with steam. This is then optionally filtered, and then carbonated with a gas comprising CO₂, and the refined sodium bicarbonate is then filtered and dried:

   Na₂CO₃+ H₂O + CO₂ 4 2 NaHCO₃

In addition, various modifications of the ammonia soda process are known, for instance by employing alternative methods of ammonia recovery. The present invention is not limited to any specific form of the ammonia soda process, as long as an effluent containing calcium chloride and sodium chloride is obtained by the process. For instance, several variations of the process are described in Ullmann's Encyclopedia of Industrial Chemistry, as mentioned above.

In summary, the ammonia process can be represented by the following simplified equations for sodium carbonate production:

2 NaCl + CaCO₃ → Na₂CO₃ + CaCl₂

And for sodium bicarbonate production (as either crude or refined sodium bicarbonate):

NaCl + 0.5 CaCO₃ + 0.5 H₂O + 0.5 CO₂ 4 NaHCO₃ + 0.5 CaCl₂

### Electrochemical process

The term "electrochemical process" is understood to mean a process of using an electric field or an electric current to drive a non-spontaneous chemical reaction or a chemical separation. In the context of the present invention, it includes all electrochemical processes which produce sodium carbonate and/or sodium bicarbonate and an effluent containing calcium chloride using calcium carbonate and sodium chloride as starting materials. Preferred examples are electrolysis and electrodialysis of sodium chloride, preferably electrolysis or electrodialysis of an aqueous sodium chloride solution, yielding sodium hydroxide and a chlorine derivative. The obtained sodium hydroxide, preferably the obtained aqueous sodium hydroxide solution, is submitted to a carbonation reaction to produce sodium carbonate. Preferably, the chlorine derivative is hydrochloric acid. Suitable carbonating agents are for instance an aqueous solution of NaHCO₃, CO₂ gas or mixtures thereof, preferably CO₂ gas. The obtained chlorine derivative is reacted with calcium carbonate to generate calcium chloride. The chlorine derivative can be reacted with calcium carbonate alone or with a mixture comprising calcium carbonate, e.g. a mixture of calcium carbonate and calcium oxide.

Other advantageous examples are electrolysis and electrodialysis of solutions comprising ammonium chloride (NH₄Cl) for regenerating ammonia (NH₃) and to produce a chlorine derivative, such as: chlorine (Cl₂), monochloramine (NH₂Cl) or dichloroamine (HCl₂), or hydrochloric acid (HCl), and using said regenerated ammonia for producing sodium carbonate or sodium bicarbonate in an ammonia soda process. When hydrochloric acid is produced, it can be advantageously used to generate CO₂ by acid attack from limestone (CaCO₃) with a coproduction of calcium chloride (CaCl₂).

Example for electrolysis: Electrolysis of sodium chloride to sodium hydroxide (NaOH) and a chlorine derivative, wherein the chlorine derivatives may be for instance chlorine gas (Cl₂), hydrochloric acid (HCl) or sodium hypochlorite (NaHClO). An example of such process is described in WO 2008/031834 A1.

Example for electrodialysis: Electrodialysis of NaCl to produce sodium hydroxide and hydrochloric acid or associated derivatives. An example of such process is described in US 4,219,396.

Thus, sodium carbonate and/or sodium bicarbonate production by an electrochemical process includes the electrochemical conversion of sodium chloride (typically an aqueous sodium chloride solution) to sodium hydroxide (typically an aqueous sodium hydroxide solution) and a chlorine derivative; the subsequent carbonation of sodium hydroxide to sodium carbonate and/or sodium bicarbonate; and the conversion of the chlorine derivative to calcium chloride by reaction with calcium carbonate.

### Further definitions

"Electrodialysis" is a process where an electric field is applied to a solution, and the solution is passed through cation-selective and/or anion-selective membranes, and/or bipolar membranes. Said selective membranes and/or bipolar membranes, are generally placed in series repeating a specific unitary configuration. When the electric current is applied, cations migrate towards the cathode and may pass through the cation-selective membranes, while anions migrate towards the anode through possibly the anion-selective membranes.

Thus, ions can selectively be removed from the solution or undergo chemical reactions.

"Electrolysis" is a process where an electric current is passed through a solution, causing the solutes to break down into their constituent elements or ions, which migrate towards the oppositely charged electrodes, where they can undergo chemical reactions.

The term "membrane technology" refers to a process of removing ions, molecules or larger particles from a liquid. In the context of the present invention, it refers particularly to the removal of ions from an aqueous solution. It encompasses reverse osmosis, electrodialysis and ion exchange.

"Ion exchange" is a process where a solution is passed through an ion exchange membrane. This kind of membranes contain fixed ion-exchange groups that selectively bind ions from a solution while allowing the passage of solvent/water molecules. Thus, ions in the solution are exchanged with ions of similar charge on the membrane, resulting in the removal of specific ions from the solution.

"Reverse osmosis" is a process where pressure is applied to a solution forcing it through a semi-permeable membrane. The membrane allows solvent/water molecules to pass through while blocking ions, molecules, and larger particles and thus, separating them from the solvent.

The term "aqueous solution" refers preferably to a solution in which water is the primary solvent. The term "aqueous" denotes the presence of water, and a solution labelled as such typically contains water as the solvent, with one or more solutes dissolved or suspended within it. Preferably, water as the primary solvent constitutes 51-100 vol.%, more preferably 70-100 vol.% of all solvents present.

The term "effluent" means a liquid waste or discharge produced during industrial processes. Usually, an effluent contains byproducts, pollutants, or contaminants that need to be managed or treated before being released into the environment.

The term "liquid" refers to a state of matter characterized by a substance that flows freely, takes the shape of its container, and maintains a constant volume. In the present invention, a liquid is often an aqueous solution.

The term "salt mine" or "salt cavities" refers to an underground excavation or facility where salt is extracted from underground deposits through mining operations.

The term "solution mining" refers to a process of obtaining a salt, in particular sodium chloride, from a salt mine. In this process, freshwater is injected into an underground salt deposit where it dissolves the salt into a saturated brine. This brine is then pumped back to the surface where it is boiled and evaporated to create salt crystals.

The term "continuous process" refers to an uninterrupted, steady production. In such process, raw materials are continuously fed into the production system, and products are continuously extracted without interruption. This type of process typically operates around the clock and is characterized by a steady flow of materials through the system.

The term "batch process" refers to a process operating in discrete batches. In such process, production occurs in discrete batches or quantities. Each batch goes through a series of steps, from raw material input to product output, before the next batch begins.

The term "semi batch process" refers to a process combining elements of both continuous and batch processes. In such process, one or more of the reactants are continuously fed into the system, while other reactants may be added in batches.

### Figures

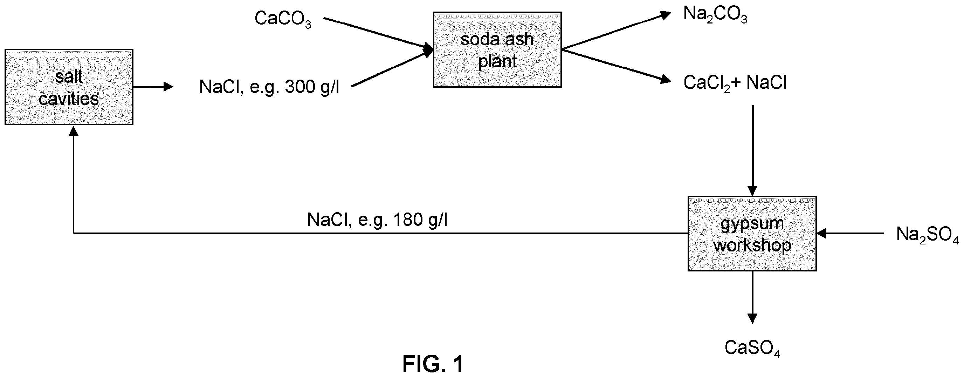

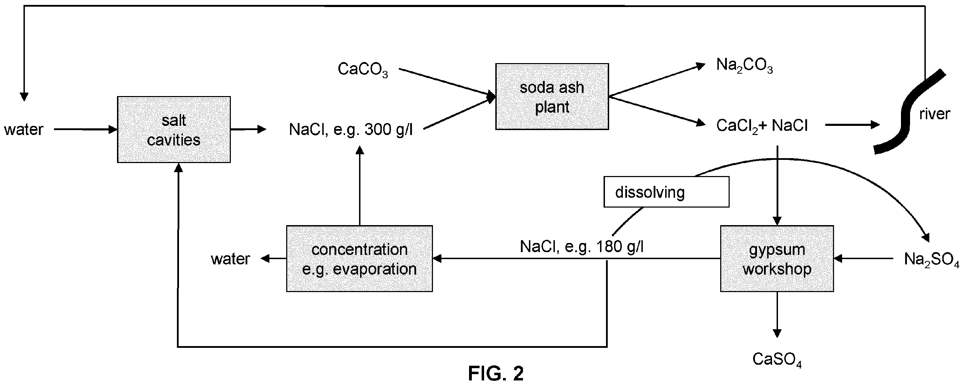

According to the inventive process, the effluent from sodium carbonate production is used as starting material in the generation of calcium sulfate ("gypsum workshop"), and the effluent from the gypsum workshop is used for extracting sodium chloride from a salt mine ("salt cavities"). The interplay between the different processes is illustrated in Figures 1 and 2.
FIG. 1 illustrates the process of the present invention. In this figure, sodium carbonate is exemplarily produced by the ammonia process in a soda ash plant.
FIG. 2 illustrates how the inventive process can be combined with further processes. These further processes are the subject of further patent applications filed by the applicant of the present invention. Further, FIG. 2 illustrates the common approach to discharge the effluent from the ammonia process into a river.

### Detailed description of the inventive process

In step (a) of the inventive process, sodium carbonate is produced by the ammonia process or by an electrochemical process. As outlined above, the ammonia process can be represented by the following simplified equation:

2 NaCl + CaCO₃ 4 Na₂CO₃ + CaCl₂

However, in general, the effluent also contains some NaCl resulting from incomplete reaction, such that as final products, sodium carbonate and an effluent containing calcium chloride and sodium chloride are obtained. For instance, the effluent comprises sodium chloride in an amount of 1 to 300 g/L, preferably 15 to 150 g/L, more preferably 20 to 60 g/L, and comprises calcium chloride in an amount of 30 to 360 g/L, preferably 50-200 g/L, more preferably 70-150 g/L. According to the present invention, the effluent containing calcium chloride and sodium chloride obtained during sodium carbonate production by the ammonia process or by an electrochemical process, is first used to generate calcium sulfate by reaction with sodium sulfate. Thus, in step (b) of the inventive process, the following reaction is performed:

CaCl₂ + NaCl + Na₂SO₄ → CaSO₄ + 3 NaCl

In this process, calcium sulfate precipitates as a solid and the remaining liquid contains dissolved sodium chloride. Preferably, the solid calcium sulfate is separated from the remaining liquid. In a next step (step (c) of the inventive process), this liquid is fed to a salt mine for extracting sodium chloride from the salt mine. And advantageously the solid calcium sulfate is valorized.

Sodium chloride can be obtained by several processes, for instance rock salt mining, solution mining, or solar salt production. In rock salt mining, sodium chloride is extracted from underground salt deposits using mechanical methods. In solar salt production, naturally occurring salt water, e.g. from the sea or saline lakes, is moved through a series of shallow, interlocking ponds, that allow evaporation of water to create brine solutions until the most saturated brines evaporate to form salt crystals. In solution mining, freshwater is injected into an underground salt deposit where it dissolves the salt into a saturated brine. This brine is then pumped back to the surface where it is boiled and evaporated to create salt crystals.

However, due to the high solubility of sodium chloride in water (around 360 g/L at 25°C), not only freshwater but also an aqueous sodium chloride solution, as obtained in step (b) of the present invention, can be used for extraction of sodium chloride from the salt mine.

Preferably, in step (a) of the inventive process, the sodium chloride used as starting material in the ammonia process or the electrochemical process, is sodium chloride that has been at least partially extracted from a salt mine. Thus, all or part of the sodium chloride used as starting material in the inventive process can be sodium chloride that has been extracted from a salt mine. The remaining NaCl can for instance come from recycled sources and preferably, at least part of the NaCl used as starting material in step (a) is obtained in step (c) of the inventive process.

Preferably, the sodium chloride extracted from the salt mine in step (c) is used at least partially, or totally, as starting material in the process of step (a). Preferably, in this case, the process is a continuous, batch or semi batch process, in which the steps (a) to (c) are repeated.

Preferably, the inventive process comprises two steps of sodium chloride extraction from a salt mine: (1) extraction before step (a) to obtain sodium chloride that can be used as starting material in step (a); and (2) extraction in step (c). It is understood that that for extraction (1), no restrictions on the method of extraction apply, whereas for extraction (2), the method of extraction needs to employ a liquid. Extraction of sodium chloride from the salt mine can be performed by any process known to the skilled person, but preferably, is performed by solution mining. Preferably, in extraction (2), extraction of sodium chloride from the salt mine is performed by solution mining. More preferably, both in extraction (1) and in extraction (2), extraction of sodium chloride from the salt mine is performed by solution mining.

Preferably, in step (a), the sodium chloride is introduced as an aqueous solution of sodium chloride comprising sodium chloride in an amount of 250 to 360 g/L. A concentration of 360 g/L NaCl corresponds to saturated solution. However, due to the presence of other impurities, the concentration of sodium chloride in the aqueous solution will typically be below that value. Thus, preferably, in step (a), the sodium chloride is introduced as an aqueous solution of sodium chloride comprising sodium chloride in an amount of 270 to 340 g/L, more preferably 290 to 330 g/L. Accordingly, in step (c), extraction of sodium chloride from the salt mine preferably generates a liquid comprising sodium chloride in an amount of 250 to 360 g/L, more preferably 270 to 340 g/L, more preferably 290 to 330 g/L.

If the brine used as starting material in step (a) contains larger amounts of inorganic impurities, this can lead to production problems and impair the quality of the final product. For example, in the ammonia process, calcium and magnesium ions can cause scaling in the equipment and pipework due to the formation of basic carbonates during ammonia absorption, which can seriously interfere with the process. Therefore, preferably, a purified brine is used. Preferably, in step (a), the sodium chloride is introduced as an aqueous solution of sodium chloride comprising sodium chloride in an amount of 250 to 360 g/L, less than 5 mg/L of magnesium ions and less than 25 mg/L of calcium ions after purification. Preferably, the concentration of magnesium and calcium ions is reduced by membrane technology or by the lime-soda process. In the lime-soda process, magnesium ions are precipitated as hydroxide, and calcium ions as carbonate:

Mg²⁺ + Ca(OH)₂ → Mg(OH)₂ + Ca²⁺

Ca²⁺ + Na₂CO₃ → CaCO₃ + 2 Na⁺

Reaction conditions for the lime-soda process are known to the skilled person and described in the prior art, e.g. in Ullmann's Encyclopedia of Industrial Chemistry, as mentioned above.

Preferably, the sodium carbonate is produced in step (a) as an aqueous solution of sodium carbonate or as a solid, selected from the group consisting of the anhydrous form, Na₂CO₃, the monohydrate form, Na₂CO₃·H₂O; the heptahydrate form, Na₂CO₃·7H₂O; and the decahydrate form, Na₂CO₃·10H₂O; and combinations thereof. More preferably, the anhydrous or monohydrate form is produced.

In step (b), the effluent from step (a) is reacted with sodium sulfate to generate calcium sulfate and a liquid containing sodium chloride. The generation of calcium sulfate from calcium chloride and sodium sulfate is also known as "gypsum workshop". Preferably, in step (b), the sodium sulfate is entered into the process as an aqueous sodium sulfate solution or directly as a solid. Preferably, the sodium sulfate in step (b) is entered into the process as an aqueous sodium sulfate solution comprising sodium sulfate in an amount of 50-350 g/L, more preferably 100-300 g/L, more preferably 120-250 g/L.

Preferably, step (b) is performed in an aqueous medium generating precipitated calcium sulfate and an aqueous solution of sodium chloride. Preferably, the liquid containing sodium chloride, preferably the aqueous solution of sodium chloride, generated in step (b) comprises sodium chloride in an amount of 50 to 350 g/L, more preferably 100 to 200 g/L, more preferably 110 to 180 g/L.

Preferably, the calcium sulfate generated in step (b) is selected from the group consisting of the anhydrite form, CaSO₄; the dihydrate form (gypsum), CaSO₄·2H₂O; and the hemihydrate form, CaSO₄·½H₂O; and combinations thereof.

Preferably, in the inventive process, in step (b), sodium sulfate is used either as anhydrous sodium sulfate or decahydrate sodium sulfate. Preferably, the sodium sulfate used as starting material in step (b) comprises at least one salt impurity, which salt impurity is selected from the list of:
- a soluble salt impurity
   preferably, a soluble salt comprising lithium, or sodium, or potassium, or magnesium, or calcium, or strontium, or barium, or borate, or nitrate, or nitrite, or phosphate, or silicate, or fluoride, or bromide, or iodide, or selenium, or tellurium, or a mixture of two or more than 2 soluble salts thereof;
- an organic salt
   preferably, an organic salt comprising organic carbon; or
- a soluble metal salt
   preferably, wherein the metal salt comprises at least one of the following chemical elements : arsenic (As), barium (Ba), beryllium (Be), bismuth (Bi), cadmium (Cd), copper (Cu), chromium (Cr), iron (Fe), lead (Pb), manganese (Mn) mercury (Hg), molybdenum (Mo), nickel (Ni), niobium (Nb), silver (Ag), thallium (Tl), tin (Sn), tantalum (Ta), titanium (Ti), tungsten (W), uranium (U), plutonium (Pu), vanadium (V), zinc (Zn), or zirconium (Zr));
- or a mixture thereof;
and wherein the salt impurity:
- is at least partially removed before adding the effluent containing calcium chloride and sodium chloride,
- or is at least partially removed by precipitation or by absorption with the calcium sulfate from step (b)
- or is at least partially removed in or after step (c) from the liquid obtained in step (b) before feeding it to the salt mine or to the salt cavity;
- or is at least partially removed before being used as starting material in the process of step (a).

Preferably, the salt impurity is at least partially removed before being used as starting material in the process of step (a), by addition of hydroxide (OH⁻) ions (such as by addition of hydrated lime or addition of caustic soda) and addition of carbonate ions (CO₃²⁻) such as addition of a sodium carbonate solution, precipitating or adsorbing said impurity with a solid which is formed during a sodium chloride purification from the manufacture of sodium carbonate and/or from the manufacture of sodium bicarbonate.

Reaction conditions for the purification of brine are known to the skilled person and described in the prior art, e.g. in Ullmann's Encyclopedia of Industrial Chemistry, as mentioned above.

## Claims

1. Process to manufacture sodium carbonate and calcium sulfate from calcium carbonate, sodium chloride, and sodium sulfate, comprising the following steps:
(a) producing sodium carbonate by the ammonia process, or by an electrochemical process, from calcium carbonate and sodium chloride and generating an effluent containing calcium chloride and sodium chloride,
(b) reacting the effluent from step (a) with sodium sulfate to generate calcium sulfate and a liquid containing sodium chloride,
(c) feeding the liquid obtained in step (b) to a salt mine for extracting sodium chloride from the salt mine.

2. The process according to claim 1, wherein in step (a), the sodium chloride used as starting material in the ammonia process, or in an electrochemical process, is sodium chloride that has been at least partially extracted from a salt mine.

3. The process according to claim 1 or 2, wherein the sodium chloride extracted from the salt mine in step (c) is used at least partially, or totally, as starting material in the process of step (a).

4. The process according to claim 3, wherein the process is a continuous, batch or semi batch process, in which the steps (a) to (c) are repeated.

5. The process according to any of claims 1 to 4, wherein extraction of sodium chloride from the salt mine is performed by solution mining.

6. The process according to any of claims 1 to 5, wherein in step (a), the sodium chloride is introduced as an aqueous solution of sodium chloride comprising sodium chloride in an amount of 250 to 360 g/L.

7. The process according to claim 6, wherein in step (a), the aqueous solution of sodium chloride comprises less than 5 mg/L of magnesium ions and less than 25 mg/L of calcium ions after purification.

8. The process according to claim 7, wherein the concentration of magnesium and calcium ions is reduced by membrane technology or by the lime-soda process.

9. The process according to any of claims 1 to 8, wherein in step (c), extraction of sodium chloride from the salt mine generates a liquid comprising sodium chloride in an amount of 250 to 360 g/L.

10. The process according to any of claims 1 to 9, wherein the sodium sulfate in step (b) is entered into the process as an aqueous sodium sulfate solution or directly as a solid.

11. The process according to claim 10, wherein the sodium sulfate in step (b) is entered into the process as an aqueous sodium sulfate solution comprising sodium sulfate in an amount of 50 to 350 g/L.

12. The process according to any of claims 1 to 11, wherein step (b) is performed in an aqueous medium generating precipitated calcium sulfate and an aqueous solution of sodium chloride.

13. The process according to any of claims 1 to 12, wherein the liquid containing sodium chloride generated in step (b) comprises sodium chloride in an amount of 50 to 350 g/L.

14. The process according to any of claims 1 to 13, wherein the calcium sulfate generated in step (b) is selected from the group consisting of the anhydrite form, CaSO₄; the dihydrate form (gypsum), CaSO₄·2H₂O; and the hemihydrate form, CaSO₄·½H₂O; and combinations thereof.

15. The process according to any of claims 1 to 14, wherein the sodium carbonate is produced in step (a) as an aqueous solution of sodium carbonate or as a solid, selected from the group consisting of the anhydrous form, Na₂CO₃, the monohydrate form, Na₂CO₃·H₂O; the heptahydrate form, Na₂CO₃·7H₂O; and the decahydrate form, Na₂CO₃·10H₂O; and combinations thereof.
